# EUROPÄISCHE PATENTSCHRIFT

(11) **EP 1 936 298 B1**
(45) Veröffentlichungstag und Bekanntmachung des Hinweises auf die Patenterteilung: **28.08.2013**
(21) Anmeldenummer: 07023018.0
(22) Anmeldetag: 28.11.2007
(51) Int. Cl.: F24H 9/20, F24D 19/00, F24H 8/00

(54) **Siphonfrostschutzeinrichtung**
Anti-freeze siphon device
Dispositif de protection de siphon contre le gel

(30) Priorität: 16.12.2006 DE 102006059582
(43) Veröffentlichungstag der Anmeldung: 25.06.2008
(73) Patentinhaber: Robert Bosch GmbH, 70442 Stuttgart (DE)
(72) Erfinder: Dertenkötter, Jens, 73230 Kirchheim (DE)

(56) Entgegenhaltungen:
- EP-A2- 1 762 791
- DE-A1- 3 609 302
- GB-A- 2 220 469
- US-A1- 2003 070 672

## Beschreibung

Die Erfindung betrifft eine Siphonfrostschutzeinrichtung gemäß dem Oberbegriff des Patentanspruches 1.
Aus dem allgemeinen Stand der Technik sind Brennwertheizgeräte bekannt. Sie dienen der Wärmeerzeugung und Wärmeübertragung an einen Heizwasserkreislauf, der wiederum die Wärme einer Gebäudeheizung und/oder Trinkwarmwasserbereitung zur Verfügung stellt. Bei der Wärmeerzeugung mittels Verbrennung von kohlenwasserstoffhaltigen Brennstoffen wie Erdgas oder Heizöl wird wasserdampfhaltiges Abgas erzeugt. Dieses wird bei Brennwertheizgeräten soweit abgekühlt, dass die Wasserdampfanteile des Abgases kondensieren. Die dabei freiwerdende Kondensationswärme wird zur effektiveren Wärmeerzeugung verwendet. Das anfallende Kondenswasser wird aus dem Brennwertheizgerät abgeleitet. Dies geschieht über externe Leitungen, in Häusern beispielsweise über das häusliche Abwasser in die Kanalisation. Zum Ableiten des Kondenswassers wird ein Siphon verwendet. Bei ausreichender Befüllung mit Sperrflüssigkeit - in der Regel erfüllt das anfallende Kondenswasser selbst diese Aufgabe - bietet der Siphon Sicherheit gegen ungewollten Abgasaustritt aus dem Heizgerät in die Aufstellumgebung oder in die angeschlossene Ableitung. Der Siphon dient dabei als Anschluss für die Ableitung und ist in der Regel nicht speziell gegen Temperatureinflüsse aus der Aufstellumgebung geschützt. Wird das Brennwertheizgerät im Gebäudeinneren aufgestellt, ist das Vorhandensein von Flüssigkeit im Siphon unproblematisch, da die Umgebungstemperatur ausreicht, um ein Gefrieren des Kondenswassers oder der Sperrflüssigkeit zu verhindern.
Wird das Brennwertheizgerät dagegen außerhalb des Gebäudes oder seiner thermischen Hülle aufgestellt, wie dies beispielsweise häufig in Südeuropa erfolgt, kann es zum Gefrieren des Kondenswassers oder der Sperrflüssigkeit im Siphon kommen. Hierdurch kann der Siphon blockiert und das im Brennwertheizgerät anfallende Kondenswasser nicht mehr abgeführt werden. Infolge kann es zu einer Störung des Brennwertheizgerätes kommen.
Eine bekannte Lösung zur Vermeidung des Gefrierens des Kondenswassers oder der Sperrflüssigkeit im Siphon bei Temperaturen unter dem Gefrierpunkt sieht vor, dass eine wärmedämmende Ummantelung um den Siphon ausgebildet ist. Diese Lösung weist jedoch den Nachteil auf, dass die Ummantelung meist nur kurzfristig und nur für geringfügig unter dem Gefrierpunkt liegende Temperaturen einen geeigneten Frostschutz bildet.
Eine weitere bekannte Lösung basiert auf einer elektrischen Heizvorrichtung am oder im Siphon. Diese Heizvorrichtung wandelt elektrische Energie einer externen Spannungsquelle in Wärme um, welche ein Gefrieren der Flüssigkeit im Siphon verhindert. Jedoch muss die Heizvorrichtung extern versorgt werden, was einen laufenden Aufwand und eine laufende Überwachung bedeutet. Zudem ist die Heizvorrichtung oftmals in direktem Kontakt mit dem Kondenswasser, welches aufgrund seiner sauren Eigenschaft die Lebensdauer der Heizvorrichtung verkürzt. Bei Ausfall der elektrischen Heizvorrichtung ist ein Frostschutz nicht mehr gewährleistet.
Die US 2003 070 672 A1 offenbart ein Verfahren und eine Vorrichtung zum Ableiten von Kondensat aus einem Ofen, welche bei Temperaturen unter dem Gefrierpunkt bertrieben werden können. Dabei ist ein Kondensatablauf vorgesehen, um den Strom von Kondensat aus dem Kondensationswärmetauschers zu einer Stelle zu führen, wo die Temperatur über dem Gefrierpunkt liegt, um dadurch sicherzustellen, dass während des Heizbetriebs das Kondensat richtig abfließen kann ohne einzufrieren.
Aus der GB 2 220 469 A ist ein Gas-Brennwertgerät bekannt, bei dem es möglich ist, das Kondensat durch ein Abflussrohr zu leiten. Dadurch wird die Wahrscheinlichkeit, dass das Kondensat bei Minusgraden im Abflussrohr einfriert, stark reduziert. Die Vorrichtung weist einen Tank zur Aufnahme und zum Sammeln von Kondensat auf, welcher eine untere Kammer und eine obere Kammer hat, die miteinander verbunden sind, wobei die obere Kammer eine kleinere Querschnittsfläche als die untere Kammer aufweist. Das Abflussrohr dient als Entwässerung für das Kondensat und für die Kondensatableitung, wobei das Kondensat vom Tank nur dann vom Abflussrohr abgeleitet wird, solange das gesammelte Kondensat auf einen vorbestimmten Pegel innerhalb der oberen Kammer gestiegen ist und nicht unter einen vorbestimmten Pegel innerhalb der unteren Kammer fällt.
Die DE 3 609 302 A1 beschreibt eine Wärmepumpe, bei der der Wärmepumpe zugehörige Teil der Heizungsanlage über ein Thermostatventil an eine gesonderte Wärmequelle anschließbar ist, um ein Einfrieren von Teilen der Wärmepumpe zu vermeiden. Dadurch wird der Energiebedarf für den Frostschutz einer Wärmepumpe auf ein Minimum beschränkt, indem nur dann eine Energiezufuhr zugelassen wird, wenn sich die Wassertemperatur der Frostgrenze nähert. Außerdem wird nur so viel Energie zugeführt, wie benötigt wird, um die Wassertemperatur in einem frostsicheren Temperaturbereich auf niedrigstem Niveau zu halten.
Ein Behälterteil zur Abführung von Kondensat aus einem Siphon in eine Abwasserleitung ist aus der EP 1 762 791 A2 bekannt. Das Behälterteil kann als optionales Bauelement in den Siphon eingebaut werden und befindet sich zwischen Siphonoberteil und Siphonunterteil. Dieses Behälterteil verfügt über eine Pumpe und mindestens einen den Füllstand detektierenden Sensor, welcher die Füllstandshöhe der Kondensflüssigkeit im Siphon über eine kapazitive Widerstandsmessung erfasst und dementsprechend das Abpumpen der Kondensflüssigkeit steuert.

Der Erfindung liegt die Aufgabe zugrunde, eine Siphonfrostschutzeinrichtung und ein Brennwertheizgerät mit einer Siphonfrostschutzeinrichtung zu schaffen, welche einen zuverlässigen Betrieb ohne externe Versorgung auf einfache Weise ohne großen zusätzlichen Aufwand auch langfristig und bei tiefen Temperaturen unter dem Gefrierpunkt des Kondenswassers bzw. der Sperrflüssigkeit realisieren.

Erfindungsgemäß wird dies mit den Merkmalen des Patentanspruches 1 gelöst. Vorteilhafte Weiterbildungen sind den Unteransprüchen zu entnehmen.
Die Siphonfrostschutzeinrichtung für ein Brennwertheizgerät, insbesondere für die Aufstellung in einer Außenumgebung mit zeitweiligen Temperaturen um den Gefrierpunkt und darunter, ist gekennzeichnet durch mindestens eine mit Heizwasser durchströmbare Fluidleitung, einen mit Kondenswasser durchströmbaren, mit einer Sperrflüssigkeit gefüllten Siphon und ein an dem Siphon angeordnetes Heizmittel zum Erwärmen des Siphons, um ein Gefrieren des den Siphon durchströmenden Kondenswassers und/oder der Sperrflüssigkeit zu verhindern. Vorgesehen ist, dass das Heizmittel als brennwertheizgerätinternes Heizmittel ausgebildet ist.
Das Heizmittel ist als brennwertheizgerätinternes Heizmittel ausgebildet. Das bedeutet, dass das Heizmittel nicht über eine externe Quelle, sondern direkt über das Brennwertheizgerät und/oder darin befindliche Medien gespeist wird. Das Heizmittel ist somit autark von externen Quellen betreibbar, soweit das Brennwertheizgerät betrieben wird. Somit ist eine zuverlässige Funktionsweise bei betriebsbereitem Brennwertheizgerät gegeben.
Es ist vorgesehen, dass das Heizmittel als in die Fluidleitung integriertes Heizmittel ausgebildet ist. Somit bildet das Heizmittel einen integralen Bestandteil des Brennwertheizgerätes und muss nicht als zusätzliches Bauteil vorgesehen werden.

Das Heizmittel ist hierbei als ein Bestandteil der Fluidleitung, welche von Heizwasser durchströmt wird, ausgebildet. Das heißt, es wird ein Bestandteil der Fluidleitung des Brennwertheizgerätes als Siphonfrostschutzeinrichtung für den Siphon genutzt. Ein Teil der durch das Heizwasser transportierten Wärme wird dabei an den Siphon übertragen.

Bevorzugt ist das Heizmittel als einteilig mit der Fluidleitung ausgebildetes Heizmittel ausgebildet ist.

Der der Wärmeübertragung und Wärmeverteilung dienende Heizwasserkreislauf gliedert sich in einen aus dem Brennwertheizgerät austretenden Heizwasservorlauf und einen in das Brennwertheizgerät zurückströmenden Heizwasserrücklauf, in dem zumeist eine Heizwasserumwälzpumpe angeordnet ist. Viele Brennwertheizgeräte weisen eine die Vorlaufleitung und Rücklaufleitung kurzschließende Bypassleitung auf, die bei Bedarf von einem Dreiwegeumschaltventil geschaltet wird. In der Bypassleitung ist ein Wärmetauscher, üblicherweise ein Plattenwärmetauscher, angeordnet, der der Trinkwarmwasserbereitung dient. Erfindungsgemäß ist vorgesehen, dass insbesondere das dem Siphonfrostschutz dienende Heizmittel als ein Bypassleitungsabschnitt ausgebildet ist. Dabei wird im Betrieb der Bypassleitungsabschnitt vom Heizwasser durchströmt. Dieses gibt einen Teil der mitgeführten Wärme bei Temperaturen deutlich über dem Gefrierpunkt an den Bypassleitungsabschnitt ab, von wo aus die Wärme weitergeleitet wird. Hierfür ist vorgesehen, dass der Bypassleitungsabschnitt als am oder zumindest teilweise im Siphon in wärmeübertragender Wirkverbindung entlanggeführter Bypassleitungsabschnitt ausgebildet ist. Der Bypassleitungsabschnitt kann dabei beispielsweise geradlinig entlang des Siphons oder ihn wendelartig umwindend geführt sein.

In einem anderen Ausführungsbeispiel kontaktiert das Heizmittel, genauer der Bypassleitungsabschnitt, das den Siphon durchströmende Kondenswasser und/oder die Sperrflüssigkeit in dem Siphon wärmeübertragend. Der Bypassleitungsabschnitt kann dabei teilwei- se den Siphon durchdringend durch einen Abschnitt des Siphons geführt sein. Zudem kann vorsehen sein, dass das Heizmittel eine den Siphon zumindest teilweise umgebende wärmedämmende Ummantelung umfasst. Insbesondere verläuft der Bypassleitungsabschnitt zumindest teilweise durch die Ummantelung. Somit wird sichergestellt, dass über das Heizmittel keine Wärmeverluste im Heizwasser-Bypassstrom entstehen.
Ein Brennwertheizgerät kann eine wie vorstehend beschriebene Siphonfrostschutzeinrichtung mit brennwertheizgerätinternem Heizmittel umfassen.

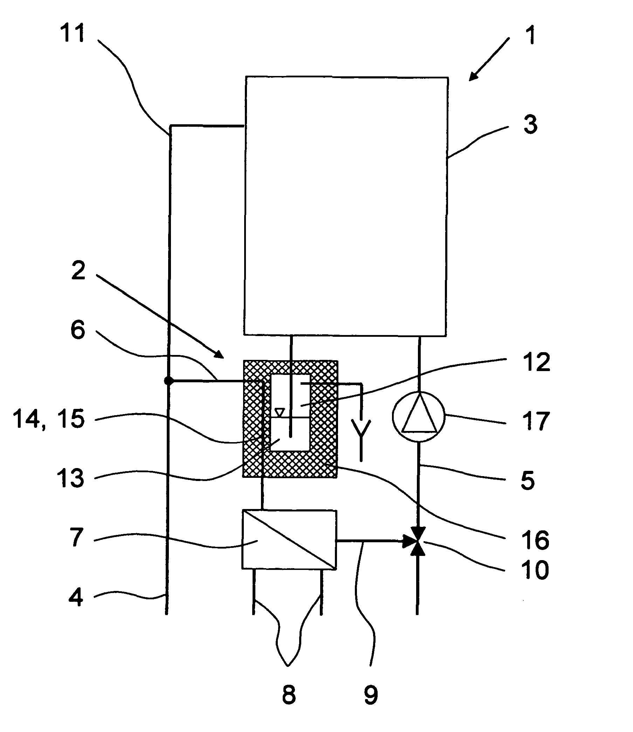

Die Zeichnung stellt ein Ausführungsbeispiel der Erfindung dar und zeigt in einer einzigen Figur ein Schaltbild eines Ausschnitts eines Brennwertheizgerätes mit einer erfindungsgemäßen Siphonfrostschutzeinrichtung.

Die Brennwertheizvorrichtung 1 umfasst eine Siphonfrostschutzeinrichtung 2, einen kondensierenden Wärmeblock 3, der über einen Vorlauf 4 und einen Rücklauf 5 mit einem hier nicht dargestellten externen Leitungssystem gekoppelt ist. Von dem Vorlauf 4 zweigt eine Bypassleitung 6 ab, welche zu einem Wärmeübertrager 7 führt. Der Wärmeübertrager 7 ist weiter mit einem Wärmekreislauf 8 (nur ausschnittsweise dargestellt) gekoppelt. Von dem Wärmetauscher 7 führt ein Bypassleitungsteil 9 zu einem Umschaltventil 10. Das Umschaltventil 10 ist in dem Rücklauf 5 dem Wärmeblock 3 vorgeschaltet. Zwischen Umschaltventil 10 und Wärmeblock 3 ist zudem eine Pumpe 17 angeordnet. Diese fördert ein in dem Rücklauf einströmendes Fluid zu dem Wärmeblock 3. Der Vorlauf 4, der Rücklauf 5, die Bypassleitung 6 und der Bypassleitungsteil 9 bilden einen Teil einer Fluidleitung 11 der Brennwertheizvorrichtung 1.
Ein nicht dargestellter Teil der Fluidleitung 11 verläuft durch den Wärmeblock 3. Durch die Fluidleitung 11 strömt Heizwasser, das im Wärmeblock 3 erwärmt wird. Hierbei entsteht in dem Wärmeblock 3 ein Kondenswasser, welches über einen fluidisch mit dem Wärmeblock 3 gekoppelten Siphon 12 abgeführt wird. Der Siphon 12 ist teilweise mit Kondenswasser und/oder einer Sperrflüssigkeit 13 gefüllt und verhindert so einen Abgasaustritt in die Aufstellumgebung des Brennwertheizgerätes.

Damit der Siphon 12 und das Kondenswasser und/oder die Sperrflüssigkeit 13 bei Aufstellung außerhalb eines zu beheizenden Gebäudes und Temperaturen unter dem Gefrierpunkt nicht einfriert und so der Abfluss des Kondensatwassers verhindert wird, weist die an dem Siphon 12 angeordnete Siphonfrostschutzeinrichtung 2 ein Heizmittel 14 auf. Das Heizmittel 14 ist hierbei als ein Bypassleitungsabschnitt 15 ausgebildet, durch den im Betrieb wärmeabgebendes Heizwasser strömt.
Der Bypassleitungsabschnitt 15 ist so ausgebildet, dass dieser in unmittelbarer Nähe des Siphons 12 verläuft. Bevorzugt verläuft der Bypassleitungsabschnitt 15 an dem oder durch den Siphon. Dabei kann der Bypassleitungsabschnitt 15 zur besseren Wärmeübertragung den Siphon 12 und/oder die Sperrflüssigkeit 13 kontaktieren. Das durch den Bypassleitungsabschnitt 15 strömende Heizwasser erwärmt durch Wärmeübertragung den Siphon 12 und damit das Kondenswasser und/oder die Sperrflüssigkeit 13. Der Bypassleitungsabschnitt 15 verläuft geradlinig entlang des Siphons 12 in dessen größter Erstreckungsrichtung.

Das Heizmittel 14 in der dargestellten Figur umfasst weiter eine den Siphon 12 umgebende wärmedämmende Ummantelung 16. Der Bypassleitungsabschnitt 15 durchdringt dabei zumindest teilweise die wärmedämmende Ummantelung 16. Nach Durchlauf durch die Ummantelung 16 ist die Bypassleitung 6 mit dem Wärmeübertrager 7 fluidisch verbunden.

## Patentansprüche

1. Siphonfrostschutzeinrichtung (2) für ein Brennwertheizgerät (1) mit mindestens einer im Betrieb von einem Heizwasser durchflossenen Fluidleitung (11) und einem mit Kondenswasser durchströmbaren, mit einer Sperrflüssigkeit (13) gefüllten Siphon (12), insbesondere für ein Brennwertheizgerät (1) mit einem einer Außenumgebung mit zeitweiligen Temperaturen um den Gefrierpunkt des Kondenswassers und/oder der Sperrflüssigkeit (13) und darunter aufsetzbaren Siphon (12), und mit einem an dem Siphon (12) angeordneten Heizmittel (14) zum Erwärmen des Siphons (12), um ein Gefrieren des den Siphon (12) durchströmenden Kondenswassers und/oder der Sperrflüssigkeit (13) zu verhindern, **dadurch gekennzeichnet, dass** das Heizmittel (14) als ein Bestandteil der Fluidleitung (11) ausgebildet ist und direkt über das Brennwertheizgerät und/oder darin befindliche Medien gespeist werden kann.

2. Siphonfrostschutzeinrichtung (2) nach Anspruch 1, **dadurch gekennzeichnet, dass** das Heizmittel (14) als in die Fluidleitung (11) integriertes Heizmittel (14) ausgebildet ist.

3. Siphonfrostschutzeinrichtung (2) nach Anspruch 1 oder 2, **dadurch gekennzeichnet, dass** das Heizmittel (14) als einteilig mit der Fluidleitung (11) gestaltetes Heizmittel (14) ausgebildet ist.

4. Siphonfrostschutzeinrichtung (2) nach einem der Ansprüche 1 bis 3, **dadurch gekennzeichnet, dass** die Fluidleitung (11) eine interne Bypassleitung (6) zu einem Umschaltventil (10) des Brennwertheizgerätes (1) aufweist, wobei das Heizmittel (14) als ein Bypassleitungsabschnitt (15) ausgebildet ist.

5. Siphonfrostschutzeinrichtung (2) nach einem der Ansprüche 1 bis 4, **dadurch gekennzeichnet, dass** der Bypassleitungsabschnitt (15) als an/in dem Siphon (12) in wärmeübertragender Wirkverbindung entlanggeführter Bypassleitungsabschnitt (15) ausgebildet ist.

6. Siphonfrostschutzeinrichtung (2) nach einem der Ansprüche 1 bis 5, **dadurch gekennzeichnet, dass** das Heizmittel (14) die in dem Siphon (12) befindliche Flüssigkeit (13) wärmeübertragend kontaktiert.

7. Siphonfrostschutzeinrichtung (2) nach einem der Ansprüche 1 bis 6, **dadurch gekennzeichnet, dass** das Heizmittel (14) eine den Siphon (12) zumindest teilweise umgebende wärmedämmende Ummantelung (16) umfasst.

8. Siphonfrostschutzeinrichtung (2) nach einem der Ansprüche 1 bis 7, **dadurch gekennzeichnet, dass** der Bypassleitungsabschnitt (15) zumindest teilweise durch die wärmedämmende Ummantelung (16) verläuft.

## Claims

1. Anti-freeze siphon device (2) for a condensing heating appliance (1) with at least one fluid line (11) through which heating water flows during operation and with a siphon (12) through which condensation water is flowable and which is filled with a confining liquid (13), in particular for a condensing heating appliance (1) with a siphon (12) capable of being set up in external surroundings having temporary temperatures around the freezing point of the condensation water and/or confining liquid (13) and below, and with a heating means (14), arranged on the siphon (12), for heating the siphon (12) in order to prevent freezing of the condensation water flowing through the siphon (12) and/or of the confining liquid (13), **characterized in that** the heating means (14) is designed as an integral of the fluid line (11) and can be fed directly via the condensing heating appliance and/or media located therein.

2. Anti-freeze siphon device (2) according to Claim 1, **characterized in that** the heating means (14) is designed as a heating means (14) integrated into the fluid line (11).

3. Anti-freeze siphon device (2) according to Claim 1 or 2, **characterized in that** the heating means (14) is designed as a heating means (14) configured in one part with the fluid line (11).

4. Anti-freeze siphon device (2) according to one of Claims 1 to 3, **characterized in that** the fluid line (11) has an internal bypass line (6) to a changeover valve (10) of the condensing heating appliance (1), the heating means (14) being designed as a bypass line section (15).

5. Anti-freeze siphon device (2) according to one of Claims 1 to 4, **characterized in that** the bypass line section (15) is designed as a bypass line section (15) led along in heat-transmitting operative connection on/in the siphon (12).

6. Anti-freeze siphon device (2) according to one of Claims 1 to 5, **characterized in that** the heating means (14) has heat-transmitting contact with the liquid (13) located in the siphon (12).

7. Anti-freeze siphon device (2) according to one of Claims 1 to 6, **characterized in that** the heating means (14) comprises a heat-insulating sheathing (16) at least partially surrounding the siphon (12).

8. Anti-freeze siphon device (2) according to one of Claims 1 to 7, **characterized in that** the bypass line section (15) runs at least partially through the heat-insulating sheathing (16).

## Revendications

1. Dispositif de protection de siphon contre le gel (2) pour une chaudière à condensation (1), comprenant au moins une conduite de fluide (11) parcourue pendant le fonctionnement par de l'eau chaude et un siphon (12) pouvant être parcouru par de l'eau de condensation, rempli d'un liquide de barrage (13), en particulier pour une chaudière à condensation (1) comprenant un siphon (12) pouvant être soumis à un environnement extérieur avec des températures temporaires autour du point de congélation de l'eau de condensation et/ou du liquide de barrage (13) et plus basses, et comprenant un moyen de chauffage (14) disposé au niveau du siphon (12) pour réchauffer le siphon (12), afin de d'empêcher le gel de l'eau de condensation s'écoulant à travers le siphon (12) et/ou du liquide de barrage (13), **caractérisé en ce que** le moyen de chauffage (14) est réalisé sous forme de composant de la conduite de fluide (11) et peut être alimenté directement par le biais de la chaudière à condensation et/ou par le biais de milieux se trouvant dans celle-ci.

2. Dispositif de protection de siphon contre le gel (2) selon la revendication 1, **caractérisé en ce que** le moyen de chauffage (14) est réalisé sous forme de moyen de chauffage (14) intégré dans la conduite de fluide (11).

3. Dispositif de protection de siphon contre le gel (2) selon la revendication 1 ou 2, **caractérisé en ce que** le moyen de chauffage (14) est réalisé sous forme de moyen de chauffage (14) configuré d'une seule pièce avec la conduite de fluide (11).

4. Dispositif de protection de siphon contre le gel (2) selon l'une quelconque des revendications 1 à 3, **caractérisé en ce que** la conduite de fluide (11) présente une conduite de dérivation interne (6) allant à une soupape de commutation (10) de la chaudière à condensation (1), le moyen de chauffage (14) étant réalisé sous forme de portion de la conduite de dérivation (15).

5. Dispositif de protection de siphon contre le gel (2) selon l'une quelconque des revendications 1 à 4, **caractérisé en ce que** la portion de la conduite de dérivation (15) est réalisée sous forme de portion de la conduite de dérivation (15) guidée le long du ou dans le siphon (12) en liaison fonctionnelle avec transfert thermique.

6. Dispositif de protection de siphon contre le gel (2) selon l'une quelconque des revendications 1 à 5, **caractérisé en ce que** le moyen de chauffage (14) vient en contact avec transfert thermique avec le liquide (13) se trouvant dans le siphon (12).

7. Dispositif de protection de siphon contre le gel (2) selon l'une quelconque des revendications 1 à 6, **caractérisé en ce que** le moyen de chauffage (14) comprend une gaine calorifuge (16) entourant au moins en partie le siphon (12).

8. Dispositif de protection de siphon contre le gel (2) selon l'une quelconque des revendications 1 à 7, **caractérisé en ce que** la portion de la conduite de dérivation (15) s'étend au moins en partie à travers la gaine calorifuge (16).
